(19) **Europäisches Patentamt**

**European Patent Office**

**Office européen des brevets**

(11) **EP 1 238 528 B1**

(12) **FASCICULE DE BREVET EUROPEEN**

(45) Date de publication et mention
de la délivrance du brevet:
**20.12.2006 Bulletin 2006/51**

(51) Int Cl.:
***H04M 9/08*** (2006.01)

(21) Numéro de dépôt: **00946024.7**

(86) Numéro de dépôt international:
**PCT/FR2000/001792**

(22) Date de dépôt: **27.06.2000**

(87) Numéro de publication internationale:
**WO 2001/045375 (21.06.2001 Gazette 2001/25)**

(54) **PROCEDE TEMPS REEL DE TRAITEMENT ET DE GESTION POUR L'ANNULATION D'ECHO ENTRE HAUT-PARLEUR ET MICROPHONE D'UN TERMINAL INFORMATIQUE**

VERFAHREN ZUR ECHTZEIT-VERARBEITUNG UND VERWALTUNG ZWECKS ECHOUNTERDRÜCKUNG ZWISCHEN LAUTSPRECHER UND MIKROFON EINES COMPUTERS

REAL-TIME PROCESSING AND MANAGEMENT METHOD FOR CANCELLING OUT THE ECHO BETWEEN LOUDSPEAKER AND MICROPHONE OF A COMPUTER TERMINAL

(84) Etats contractants désignés:
**AT BE CH CY DE DK ES FI FR GB GR IE IT LI LU MC NL PT SE**

(30) Priorité: **14.12.1999 FR 9915742**

(43) Date de publication de la demande:
**11.09.2002 Bulletin 2002/37**

(73) Titulaire: **FRANCE TELECOM**
**75015 Paris (FR)**

(72) Inventeurs:
• **LE TOURNEUR, Grégoire**
**F-22700 Saint-Quay-Perros (FR)**

• **DELEAM, David**
**F-22700 Perros Guirec (FR)**

(74) Mandataire: **Loisel, Bertrand**
**Cabinet Plasseraud**
**52 rue de la Victoire**
**75440 Paris Cedex 09 (FR)**

(56) Documents cités:
**EP-A- 0 709 999      EP-A- 0 741 471**
**EP-A- 0 895 397**

**Description**

L'invention concerne un procédé temps réel de traitement et de gestion pour l'annulation d'écho entre un haut-parleur et un microphone d'un terminal informatique.

L'écho acoustique présent sur le signal de microphone en raison d'un couplage parasite entre le haut-parleur et le microphone d'un terminal informatique, terminal tel qu'un ordinateur personnel, ou PC, une station de travail ou toute autre machine, est l'obstacle majeur au bon fonctionnement en mains libres des logiciels de communication vocale entre utilisateurs. Cet écho acoustique résulte du signal émis par le haut-parleur et capté, au moins partiellement, par le microphone du fait de ce couplage parasite.

Les algorithmes d'annulation d'écho sont adaptés à un tel contexte applicatif, et la communication en mains libres entre terminaux de visioconférence présente un attrait indéniable, malgré le retard inhérent à ce mode de communication.

Dans ce but, les solutions actuellement proposées consistent essentiellement en un système externe au terminal, ou à la machine hôte, désigné par "*add on audio*" en langage anglo-saxon.
La mise en oeuvre de tels systèmes constitue toutefois un frein à la diffusion des produits de communication en raison, d'une part, des surcoûts engendrés, et, d'autre part, des difficultés d'installation.

Parmi les processus de suppression d'écho, une solution décrite par la demande EP 0 895 397 consiste à corréler le signal de parole et le signal délivré par un haut parleur, à aligner le signal de parole sur le signal de haut parleur puis, après une normalisation d'amplitude du signal de parole retardé, à effectuer une suppression de l'écho par ajustage du gain dans le domaine fréquentiel, après application d'une transformée fréquentielle du signal de parole et du signal de haut parleur. Un transformée fréquentielle inverse est alors nécessaire pour obtenir un signal de parole dans lequel l'écho est supprimé. Un tel processus est particulièrement lourd à mettre en oeuvre, en raison des traitements successifs de corrélation, de traitement par transformée fréquentielle de suppression d'écho dans le domaine fréquentiel, de transformée fréquentielle inverse, lesquels requièrent les ressources de calcul très importantes.

Une possibilité, afin de lever une telle hypothèque, peut consister à intégrer une telle fonction d'annulation d'écho en un traitement temps réel, par voie logicielle, dans la machine hôte, en tant que tâche à part entière au même titre que les tâches spécifiques nécessaires, telles que tâche de codage/décodage du son, traitement d'image, interfaçage avec le réseau.

A priori, l'opération de portage d'un logiciel d'annulation d'écho sur une machine hôte, telle qu'un ordinateur PC, ne constitue pas en soi un obstacle, le processeur de telles machines étant programmable en langage de haut niveau, et, de manière générale, doté d'une puissance de calcul compatible avec l'application visée, au moins sur les machines de génération récente.

Toutefois, une telle opération se voit confrontée au problème de la synchronisation des flux de données audio, flux entrants et flux sortants, pour la mise en oeuvre de la fonction d'annulation d'écho. Ces flux sont engendrés par la carte son de la machine hôte.

Lorsqu'une tâche n'utilise qu'un flux d'entrée et un flux de sortie, ainsi que dans le cas du codage/décodage de la parole, du traitement d'image et de l'interfaçage réseau, le processus de synchronisation est relativement simple dans la mesure où la fin du remplissage d'un "*buffer*" d'entrée, ou mémoire tampon, déclenche l'exécution de la tâche considérée, puis le remplissage d' un "*buffer*" de sortie en fin d'exécution de tâche.

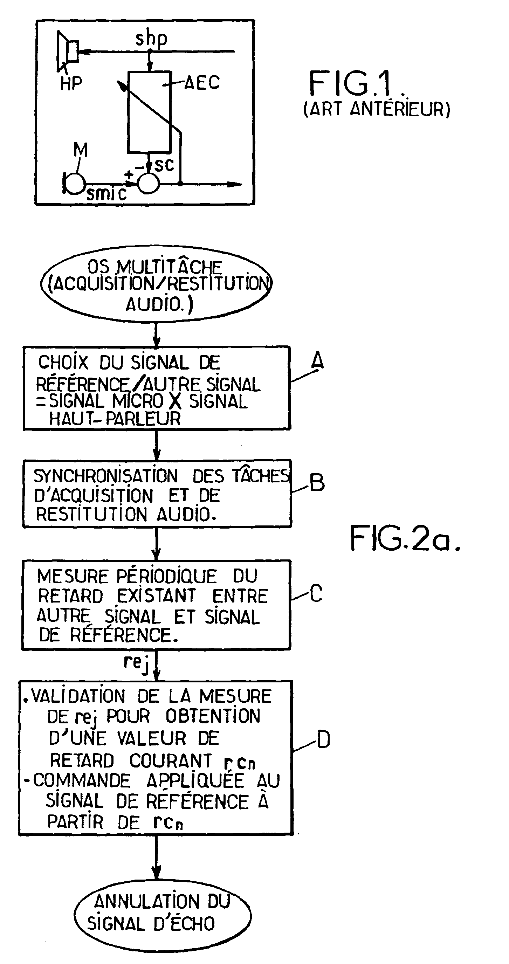

Au contraire, dans le cas de l'annulation d'écho entre haut-parleur et microphone d'un terminal informatique, cas dans lequel, ainsi que représenté en figure 1, un élément annuleur d'écho AEC constitué par un filtre adaptatif permettant de réinjecter pour soustraction sur le signal de microphone une fraction du signal de haut-parleur, l'annuleur d'écho précité nécessite l'existence de deux flux d'entrée, signal en provenance du microphone désigné par signal de microphone smic, et signal en provenance du correspondant distant, destiné au haut-parleur et pour cette raison désigné par signal de haut-parleur shp.
Le processus d'annulation d'écho est basé sur l'estimation de la réponse impulsionnelle du couplage parasite-haut-parleur/microphone. L'annuleur d'écho AEC engendre un ou deux flux de sortie comprenant au moins la fraction du signal de haut-parleur réinjectée.
Un tel mode opératoire nécessite donc l'attente de la fin du remplissage de deux "*buffers*" d'entrée, pour procéder au lancement de la tâche d'annulation d'écho considérée.
En outre, et de manière impérative, les deux flux de données entrants doivent être parfaitement synchrones, afin de permettre l'estimation correcte de la fonction de transfert acoustique du couplage parasite obtenue à partir de la réponse impulsionnelle.

Lorsque, dans le cas de la technique antérieure, la fonction d'annulation d'écho est réalisée par l'intermédiaire d'une carte DSP, carte munie d'un processeur de signal dédié, ou le cas échéant par l'intermédiaire d'un élément audio additionnel, "*add on*" audio, la condition impérative précitée de parfait synchronisme est vérifiée, puisqu'une seule horloge, celle de la carte DSP ou "*add on*" est utilisée pour piloter, à la fois, le convertisseur analogique/numérique opérant sur le signal de microphone, le transfert des données numériques vers le processeur de signal, la synchronisation, par interruption par exemple, du programme de calcul dans le processeur de signal dédié et pour fournir les échantillons calculés au convertisseur numérique/analogique destiné au haut-parleur. En outre, la tâche d'annulation d'écho et les opérations de calcul correspondantes sont les seules réalisées par le processeur de signal lorsque celui-ci est un processeur de signal dédié, ou à tout le moins réalisées de manière ultra-prioritaire.

Le portage de la tâche précitée dans une machine hôte se heurte toutefois aux difficultés techniques majeures ci-après.

La gestion des flux de données audio est effectuée, dans un tel cas, à partir de couches logicielles, telles que des couches gérées par le système d'exploitation ou les API, pour *Application Program Interface,* lorsque le système d'exploitation *WINDOWS®* est utilisé. Ces couches logicielles masquent les contraintes temps réel liées aux processus d'acquisition/restitution des signaux audio. Toutefois, pour obtenir une portabilité maximale des logiciels, il n'est pas envisageable d'utiliser des couches logicielles dont le code objet est spécialement adapté à la structure de la machine hôte, car il faudrait alors réécrire ces dernières, ce qui, de plus, nécessiterait pratiquement une version logicielle par type de machine.

Malgré l'attribution d'une priorité haute à la tâche d'annulation d'écho précitée, les tâches systèmes, nécessaires à la mise en oeuvre du système d'exploitation, peuvent toutefois interrompre le déroulement du programme de traitement d'annulation d'écho et peuvent, en conséquence, bloquer, l'un, l'autre ou les deux des flux de données audio, et ainsi provoquer une discontinuité dans le processus d'acquisition/restitution des signaux de parole.

Ainsi, à titre illustratif, on rappelle que, lors de l'émission d'un son à partir d'échantillons de parole, il est tout d'abord procédé à une initialisation de la carte son, par spécification de la fréquence d'échantillonnage, de la taille et du nombre des *"buffers"* ou mémoires tampon utilisées pour assurer le transfert des données. Une première phase consiste ensuite à remplir tous les "*buffers*" spécifiés et à valider la sortie en lecture de ces derniers. Lorsque cette première phase est terminée, le système d'exploitation se place en attente des *"buffers"* joués ou lus. En effet, le *"thread"* ou tâche de traitement dans un système d'exploitation multitâche n'est activé sur indication de la carte son que si au moins l'un des *"buffers"* a été lu.

Un fonctionnement similaire régit également l'acquisition en écriture d'échantillons en provenance de l'entrée du microphone de la carte son. Dans ces conditions, le nombre de *"buffers"* utilisables par les "*API*", pour *Application Program Interface* en langage anglo-saxon, de la carte son est de même spécifié. Cette dernière renvoie au système d'exploitation une indication permettant d'identifier le *"buffer"* qui vient d'être rempli en écriture.

Pour s'affranchir des problèmes de gestion fine des opérations d'écriture/lecture des *"buffers",* il est préférable de spécifier un nombre important de *"buffers"* de grande taille.

Malencontreusement, un tel choix conduit à un retard important, susceptible d'atteindre quelques secondes, dans la chaîne audio. Alors qu'un tel retard ne porte pas à conséquence majeure dans le cas d'applications actuelles, telles que les jeux, n'utilisant que la sortie son sur les ordinateurs personnels PC, ce retard s'avère, au contraire, catastrophique pour un système ou une application de communication bidirectionnelle.

En effet, dans une application de communication *audio full duplex,* tout retard introduit sur l'une ou l'autre des communications présente une influence particulièrement néfaste sur le naturel et la fluidité de la conversation.

Pour cette raison, il est nécessaire de travailler avec une taille et un nombre de *"buffers"* le plus petit possible, afin de discrétiser et réduire chaque temps de retard introduit. Cette contrainte rend toutefois particulièrement critique la gestion et l'interruption des tâches d'acquisition/restitution sonore.

En outre, l'arrêt des tâches logicielles précitées d'acquisition et de restitution se traduit par une diminution ou une augmentation du retard entre le signal micro et le signal haut-parleur, ce retard étant ainsi rendu variable. En effet, la carte son n'étant pas complètement liée au système d'exploitation, le degré d'autonomie de la carte son permettant un certain allégement de la charge et du temps d'utilisation du processeur central et du système d'exploitation, un décalage temporel se produit entre les modules matériels de la carte, en raison de leur autonomie partielle, et les modules logiciels étant sensibles aux différentes sollicitations du système d'exploitation.

Alors que l'oreille humaine n'est que moyennement sensible, ou n'est sensible à ces retards qu'à partir d'une certaine valeur du temps d'interruption des flux, les processus d'annulation d'écho et les systèmes d'annulation d'écho mettant en oeuvre ces derniers perdent totalement leur référence temporelle. En conséquence, une discontinuité dans les flux audio se traduit par un décalage temporel de la réponse immpulsionnelle du couplage parasite haut-parleur/microphone estimée par l'annuleur d'écho.

Dans le pire des cas, la fenêtre temporelle d'estimation de la réponse impulsionnelle du couplage parasite entre le haut-parleur et le microphone étant limitée par le nombre de coefficients de l'annuleur d'écho, constitué par un filtre numérique adaptable, la discontinuité temporelle dans l'acquisition/restitution sonore peut conduire à ce que le couplage physique parasite précité, lequel ne peut être mis en évidence que pendant l'existence du signal de haut-parleur, apparaisse en dehors de cette fenêtre d'estimation. L'annuleur d'écho ne produit alors plus aucun effet.

Ainsi, les problèmes à résoudre pour une implantation logicielle, permettant un traitement temps réel, des fonctions d'annulation d'écho sur un terminal informatique, consistent, d'une part, en ce que le retard initial entre le signal haut-parleur et le signal microphone est variable d'un terminal informatique à l'autre, et en ce que, d'autre part, ce retard varie au cours du temps, soit à la suite d'actions commandées par le système d'exploitation du terminal, soit à la suite d'un phénomène de dérive des horloges équipant le terminal.

La présente invention a pour objet de remédier aux inconvénients et problèmes des systèmes de l'art antérieur, en vue de permettre une implantation efficace de fonctions d'annulation d'écho sous forme logicielle pour assurer un traitement temps réel sur les terminaux informatiques de tout type.

Dans ce but, la présente invention a plus particulièrement pour objet, compte tenu du choix d'un algorithme d'annulation d'écho spécifiquement adapté à un tel contexte de traitement temps réel, de réduire au maximum la sensibilité du processus d'acquisition/ restitution sonore vis-à-vis de tâches gérées par le système d'exploitation du terminal plus prioritaires.

En conséquence, un autre objet de la présente invention est également de prévenir tout risque de dérive d'horloge entre le signal de microphone et le signal de haut-parleur, par suréchantillonnage puis sous-échantillonnage de ces signaux, la gestion du changement de fréquence d'échantillonnage étant effectuée de manière logicielle dans la ou les tâches d'acquisition/restitution.

Un autre objet de la présente invention est en outre la mise en oeuvre d'un procédé de traitement en ligne d'annulation d'écho dans un terminal informatique permettant d'estimer périodiquement le retard physique entre les flux audio haut-parleur et microphone.

Un autre objet de la présente invention est enfin, à partir de la valeur estimée de ce retard physique, la mise en oeuvre d'un procédé permettant de corriger ce retard, afin de recaler de manière optimale la réponse impulsionnelle estimée du couplage parasite haut-parleur/microphone, dans la fenêtre d'analyse de l'annuleur d'écho.

Le procédé temps réel de traitement et de gestion pour l'annulation d'écho entre un haut-parleur et un microphone d'un terminal informatique géré par un système d'exploitation multitâche assurant l'acquisition et la restitution audio, objet de la présente invention, s'applique à un processus d'annulation d'écho, l'écho étant engendré par un couplage physique parasite entre le haut-parleur et le microphone délivrant un signal de microphone et corrigé par soustraction au signal de microphone d'un signal de correction formé par une fraction du signal de haut-parleur retardé et filtré.

Il est remarquable en ce qu'il consiste à établir l'un des signaux de haut-parleur respectivement de microphone comme signal de référence et à synchroniser l'autre signal de microphone respectivement de haut-parleur par rapport à ce signal de référence et à synchroniser les tâches d'acquisition et de restitution audio. Il consiste en outre à mesurer périodiquement le retard existant entre l'autre signal et le signal de référence, pour obtenir une valeur de retard existant mesurée. La mesure de retard existant est ensuite validée pour obtenir une valeur de retard courant et le retard appliqué au signal de référence est commandé à partir de ce retard courant, pour annuler le signal d'écho.

Le procédé objet de la présente invention trouve application aux terminaux informatiques de tout type, munis d'un système d'exploitation de la famille *WINDOWS®* 98 ou NT, des systèmes d'exploitation BeOS, UNIX ou analogues.

Il sera mieux compris à la lecture de la description et à l'observation des dessins ci-après dans lesquels, outre la figure 1 relative à l'art antérieur :

- la figure 2a représente, à titre illustratif, un organigramme des étapes de mise en oeuvre du procédé objet de la présente invention ;
- les figures 2b et 2c représentent des diagrammes temporels de drapeaux de synchronisation de tâches ;
- la figure 2d représente, à titre illustratif, un schéma fonctionnel des relations entre les différents modules matériels et/ou logiciels d'un système permettant la mise en oeuvre du procédé temps réel de traitement et de gestion pour l'annulation d'écho entre haut-parleur et microphone d'un terminal informatique, objet de l'invention ;
- la figure 2e représente, à titre illustratif, un organigramme des étapes de mise en oeuvre du procédé objet de l'invention dans un mode de réalisation préférentiel dans lequel tout risque de dérive temporelle entre le signal de microphone et le signal de haut-parleur est supprimé ;
- la figure 3 représente un détail de mise en oeuvre spécifique de l'étape de mesure périodique du retard existant entre le signal de référence et l'autre signal ;
- la figure 4a représente un diagramme temporel relatif à un processus de validation de valeurs de retard existant mesurées en valeurs de retard courant ;
- la figure 4b représente un organigramme séquentiel illustratif d'un processus de validation de valeurs de retard existant mesurées en valeurs de retard courant ;
- les figures 5a, 5b et 5c représentent à titre illustratif des diagrammes de commande du retard du signal de référence, signal de haut-parleur ou signal de microphone, à partir de chaque valeur de retard courant, établie à partir d'une ou plusieurs valeurs de retard existant successives.

Une description plus détaillée du procédé temps réel de traitement et de gestion pour l'annulation d'écho entre un haut-parleur HP et un microphone M d'un terminal informatique sera maintenant donnée en liaison avec la figure 2a et les figures suivantes.

On rappelle en premier lieu, en référence à la figure 1, que le haut-parleur HP reçoit le signal de haut-parleur, noté shp, et que le microphone délivre le signal de microphone, noté smic. En outre, on rappelle que dans le cadre d'un système d'exploitation OS multitâche, l'acquisition/restitution audio est gérée par ce dernier dans le cadre d'une application communément désignée par API lorsque le système d'exploitation est par exemple le système *WINDOWS*®. On rappelle également que l'écho est engendré par un couplage physique parasite entre le haut-parleur HP recevant le signal de haut-parleur shp et le microphone délivrant le signal de microphone smic, lequel est entaché d'un signal parasite dû à l'écho précité transmis par le couplage physique parasite mentionné précédemment. Le signal de microphone peut alors être corrigé par soustraction au signal de microphone smic d'un signal de correction sc formé par une fraction du signal de haut-parleur shp filtré par le filtre adaptatif de l'annuleur d'écho, noté AEC sur la figure 1.

En référence à la figure 2a, on indique que le procédé objet de la présente invention est remarquable en ce qu'il consiste, en une étape A, à établir l'un des signaux de haut-parleur shp ou de microphone smic comme signal de référence et à synchroniser l'autre signal, le signal de microphone respectivement de haut-parleur par rapport à ce signal de référence.

L'étape A permet de simplifier le problème à résoudre en privilégiant ainsi une solution algorithmique de traitement qui, en fait, ne modifie qu'un seul des flux audio, l'autre flux étant ainsi constitué en un flux de référence. Ce mode opératoire permet de gérer les deux flux différents en entrée et en sortie, l'algorithme de traitement étant ainsi adapté au contexte. A titre d'exemple non limitatif, on indique que l'algorithme de traitement peut être constitué par l'algorithme $APA_2$ décrit dans la demande de brevet français 2 738 695. Le processus de traitement ainsi introduit n'agit que sur le signal microphonique par exemple, le signal de haut-parleur étant pris comme signal de référence sur lequel différentes opérations seront réalisées ainsi qu'il sera décrit ultérieurement dans la description.

Sur la figure 2a, à l'étape A, le choix alternatif du signal de référence et de l'autre signal est représenté par la relation :

**Choix du signal de référence/autre signal = signal micro X signal haut-parleur**

Le symbole X représente le choix alternatif du signal micro respectivement du signal haut-parleur comme signal de référence. Le choix du signal de référence peut être effectué pour une pluralité d'utilisations du procédé objet de l'invention, mais peut être modifié en fonction du contexte d'utilisation.

L'étape A précitée est alors suivie d'une étape B consistant à synchroniser les tâches d'acquisition et de restitution audio par l'intermédiaire d'un processus de synchronisation spécifique. L'étape B précitée permet ainsi de réduire la sensibilité des tâches de gestion des flux audio vis-à-vis des autres tâches gérées par le système d'exploitation et auxquelles une priorité plus élevée a été attribuée. On rappelle que la désignation de tâche correspond à la désignation anglo-saxonne de *"thread"*.

En effet, dans le cas où la gestion de l'acquisition/restitution audio est effectuée à partir de deux *"threads"* indépendants en acquisition et en restitution, l'activation de tâches système, telle que par exemple l'ouverture d'une autre application, peut entraîner l'arrêt de l'un ou l'autre des *"threads"* d'acquisition/restitution audio en fonction de l'activation de ces derniers et de leur priorité. Selon que l'un ou l'autre des *"threads"* audio est affecté, le flux du signal microphone smic prend de l'avance ou du retard par rapport au flux du signal haut-parleur shp.

L'étape B représentée à la figure 2a, conformément à un aspect remarquable du procédé objet de la présente invention, permet de diminuer ce phénomène en rendant synchrones les deux *"threads"* d'acquisition/restitution audio. Dans ce but, des mécanismes classiques de synchronisation de *"threads*" peuvent être utilisés ainsi qu'il sera décrit ultérieurement dans la description.

On indique en particulier que le processus de synchronisation des tâches d'acquisition/restitution audio engendrées à l'étape B a pour effet de limiter le décalage des flux audio précités sans toutefois l'annuler totalement, en raison du fait que le décalage introduit par le matériel, c'est-à-dire par la carte son, et par les logiciels d'application API, ne peuvent être gérés complètement par une telle synchronisation.

En outre, alors qu'une mise en veille des *"threads"* par le système d'exploitation se traduit par un décalage limité des flux audio, ce décalage pouvant correspondre à un décalage inférieur à la durée d'un échantillon et donc non perceptible pour l'utilisateur, plusieurs mises en veille successives se traduisent au contraire par un décalage cumulé plus important, ce décalage cumulé ne pouvant pas être totalement réduit par le processus de synchronisation mis en oeuvre à l'étape B précitée. Le décalage peut également être supérieur à la durée d'un échantillon et donc être perceptible directement pour l'utilisateur.

L'étape B est alors suivie d'une étape C consistant à mesurer périodiquement le retard existant entre l'autre signal et le signal de référence, chaque valeur de retard existant étant notée $re_j$ par exemple. D'une manière générale, et selon un aspect particulièrement remarquable du procédé objet de la présente invention, on indique que la mesure périodique du retard existant entre l'autre signal et le signal de référence est réalisée périodiquement et de manière continue, sur une portion du signal, pendant toute la mise en oeuvre du procédé dans les conditions plus détaillées qui seront décrites ultérieurement dans la description.

L'étape C est alors suivie d'une étape D consistant à valider la mesure de retard existant pour l'obtention d'une valeur de retard courant, notée $rc_n$, où la valeur de retard courant correspond sensiblement à au moins une valeur ou une combinaison de valeurs de retards existants antérieurs, cette combinaison étant réalisée sur critère spécifique qui sera décrit ultérieurement dans la description.

Bien entendu, l'étape de validation de la mesure du retard existant en une valeur de retard courant est alors accompagnée d'une commande appliquée au signal de référence à partir du retard courant pour annuler le signal d'écho.

On comprend en particulier que compte tenu de la valeur de retard courant obtenue, il est ainsi possible de commander le retard appliqué au filtrage adaptatif appliqué à la fraction de signal de haut-parleur shp et bien entendu de commander les coefficients de filtrage du filtre adaptatif précité, pour assurer une adaptation du signal de correction sc permettant par soustraction au signal de microphone smic d'annuler l'écho ainsi introduit. Le retard appliqué au signal de référence peut être mis en oeuvre par mémorisation de ce signal dans un "*buffer*" variable, et accès en lecture à ce signal mémorisé avec le retard appliqué par adressage décalé correspondant.

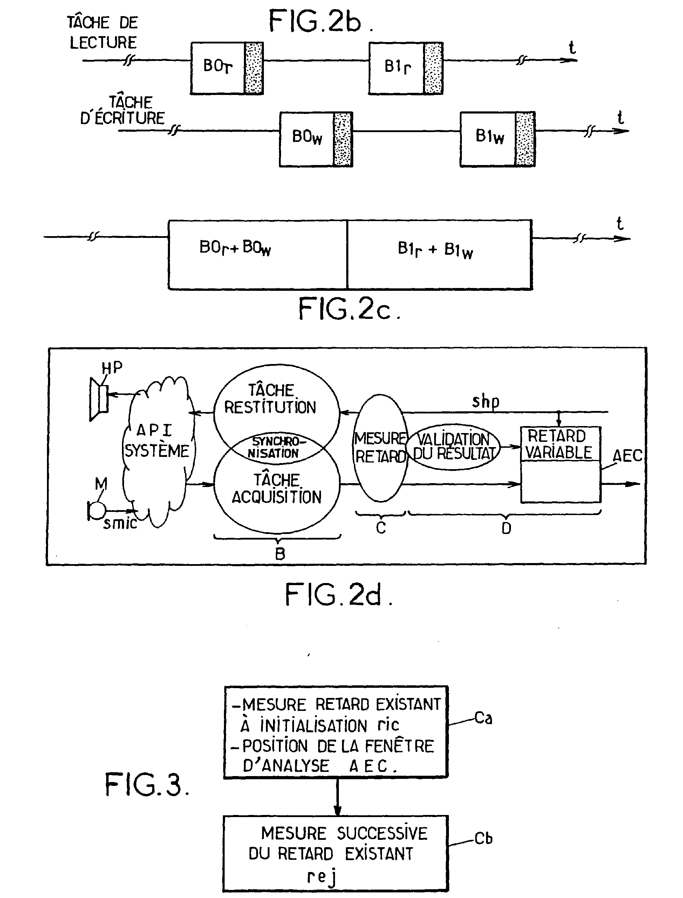

Une description plus détaillée du processus de synchronisation des tâches d'acquisition et de restitution audio mis en oeuvre à l'étape B précédemment décrite en liaison avec la figure 2a, sera maintenant donnée en liaison avec les figures 2b et 2c dans deux modes de réalisation préférentiels non limitatifs.

D'une manière générale, on indique que le processus de synchronisation de tâches précité peut être réalisé par l'intermédiaire de l'émission de drapeaux représentatifs d'une référence temporelle de synchronisation de tâches. Ces drapeaux peuvent être émis par le système d'exploitation OS à l'attention de l'application API considérée.

En référence à la figure 2b, on indique que la synchronisation des "*threads*" d'acquisition et de restitution sonore peut consister à synchroniser deux tâches indépendantes d'acquisition ou écriture, respectivement de restitution ou lecture audio, par des drapeaux consécutifs synchronisés comportant, ainsi que représenté en figure 2b, une commande d'acquisition, symbolisée par W, respectivement de restitution ou lecture ou écriture, symbolisée par R.

La figure précitée représente un diagramme temporel de synchronisation entre deux tâches indépendantes, la tâche d'écriture étant en attente de l'activation du drapeau R, drapeau activé lorsque la tâche de lecture a terminé la lecture du "*buffer*" $B_0$ par exemple, et réciproquement la tâche de lecture étant en attente de l'activation du drapeau W, drapeau activé lorsque la tâche d'écriture a terminé l'acquisition du "*buffer*" $B_0$. L'activation des drapeaux est représentée en grisé.

En outre, ainsi que représenté en figure 2c, l'étape B consistant à synchroniser les tâches d'acquisition et de restitution sonore peut consister avantageusement à engendrer, à partir du système d'exploitation, une tâche commune d'acquisition/restitution sonore. La figure précitée représente l'indivision de la gestion de lecture d'un "*buffer*" $B_{0r}$ et d'écriture d'un autre "*buffer*" $B_{0W}$ par exemple dans une tâche commune. Le mode de réalisation de synchronisation de tâches tel que représenté en figure 2c apparaît plus simple et économise en fait une commande d'exécution de tâches et bien entendu un délai ou un micro-délai de passage de l'une à l'autre tâche successivement.

Sur la figure 2d, on a représenté, à titre illustratif, un schéma fonctionnel des relations entre les différents modules matériels et/ou logiciels d'un système permettant la mise en oeuvre du procédé temps réel de traitement et de gestion pour l'annulation d'écho entre haut-parleur et microphone d'un terminal informatique conforme à l'objet de la présente invention.

Alors que l'étape A de choix du signal de référence n'est pas représentée sur la figure 2d, ce choix correspondant à un choix délibéré, par exemple pour un type de logiciel développé, on indique que l'étape B peut être réalisée conformément au processus représenté en figure 2b ou 2c et que les étapes de mesure de retard C et de validation de chaque retard existant puis de la commande appliquée au signal de référence sont alors utilisées pour assurer la commande du retard variable appliquée à ce dernier et assurer ainsi le filtrage du signal de microphone smic par l'intermédiaire du filtre AEC, ainsi qu'il sera décrit ultérieurement dans la description.

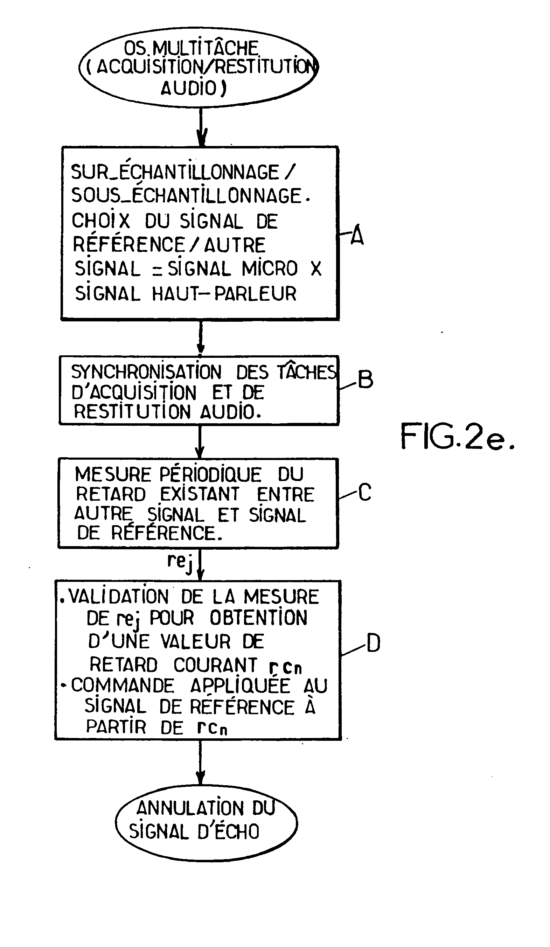

En ce qui concerne l'étape A précitée, celle-ci peut consister, dans un mode de réalisation préférentiel de mise en oeuvre du procédé objet de l'invention, tel que représenté en figure 2e, à effectuer soit préalablement, soit de manière concomitante au choix du signal de référence une sous-étape auxiliaire consistant à recevoir, respectivement émettre les échantillons du signal microphone et haut-parleur à la fréquence maximale d'échantillonnage du système puis de ramener, par décimation, les échantillons et le signal échantillonné à la fréquence d'échantillonnage nominale. Ce processus est conduit par commande de suréchantillonnage, par l'intermédiaire du système, et initialisation de la carte son avec, en paramètre de fréquence d'acquisition, la cadence d'horloge maximale, puis gestion du changement de fréquence d'échantillonnage, commande de sous-échantillonnage, de manière logicielle dans le ou les tâches d'acquisition/ restitution. Les tâches d'acquisition et de restitution précitées permettent ainsi de gérer les signaux précités, de manière à recevoir respectivement émettre des échantillons du signal microphone smic respectivement du signal haut-parleur shp à la fréquence maximale admissible par la carte son et de ramener cette fréquence à sa valeur nominale par l'intermédiaire d'une décimation, ou sous-échantillonnage. Le mode opératoire précité permet de supprimer la dérive temporelle susceptible d'exister entre signal microphone smic et signal haut-parleur shp, en raison d'une transmission directe des échantillons au système et aux applications puis du rétablissement de la fréquence d'échantillonnage par les tâches d'acquisition/restitution.

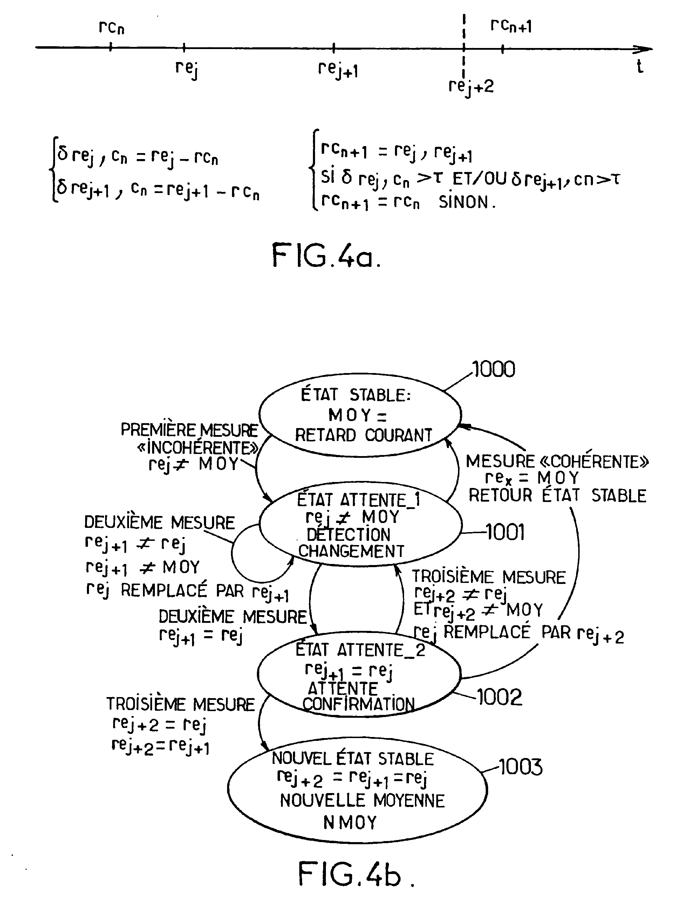

Une description plus détaillée de l'étape C consistant à mesurer le retard existant entre l'autre signal et le signal de référence, le signal de référence pouvant par exemple être constitué par le signal de haut-parleur shp et l'autre signal par le signal de microphone smic, sera maintenant donnée en liaison avec la figure 3.

En référence à la figure précitée, on indique que l'étape de mesure du retard peut être réalisée par l'intermédiaire d'une première sous-étape Ca consistant à mesurer le retard existant à l'initialisation du procédé objet de l'invention ou du système pour définir un retard initial calibré et permettre ainsi de positionner la fenêtre d'analyse de l'annulation d'écho et en particulier de l'annuleur d'écho au démarrage de celui-ci, c'est-à-dire du filtre adaptatif AEC utilisé à cet effet.

La sous-étape Ca est alors suivie d'une sous-étape Cb consistant à mesurer le retard existant successivement et de manière continue pendant la mise en oeuvre du procédé, compte tenu des opérations déclenchées par le système d'exploitation OS du terminal informatique.

De manière plus spécifique, on indique que le retard à l'initialisation dépend du matériel utilisé, c'est-à-dire du terminal informatique et de la carte son équipant ce dernier. Il dépend bien entendu du système d'exploitation utilisé, le système *WINDOWS NT*® étant généralement reconnu comme plus rapide que le système *WINDOWS 98*®. D'une manière générale, on indique que la mesure du retard existant à l'initialisation ric constituant la valeur de retard calibrée peut être conduite à partir de toute méthode de mesure intrusive ou non intrusive. Cette valeur de retard initial calibrée ric permet alors d'ajuster la position de la fenêtre d'analyse de l'annuleur d'écho AEC et de permettre ainsi l'estimation de la réponse impulsionnelle du couplage parasite physique à l'initialisation.

A titre d'exemple, pour un filtre adaptatif constitutif de l'annuleur d'écho AEC comportant 800 coefficients à 8 kHz, la fenêtre d'analyse présente une largeur de 100 ms. Dans le cas où le retard entre le flux du signal haut-parleur shp constituant le signal de référence, et le flux du signal de microphone smic est supérieur à 100 ms, par exemple 130 ms, il n'est pas possible d'annuler l'écho correspondant en l'absence de positionnement convenable de la fenêtre d'analyse, car il n'existe aucune correspondance entre les deux signaux sur la longueur temporelle d'analyse précitée. Dans l'exemple précité, il est alors nécessaire d'introduire un retard au minimum égal à 50 ms, la réponse impulsionnelle estimée se trouvant, dans le cas de l'introduction d'un tel retard en limite de la fenêtre d'analyse. Le retard introduit, afin de positionner idéalement la fenêtre d'analyse, peut être pris légèrement inférieur à 130 ms sur le flux du signal de référence afin de mettre en correspondance les deux flux et obtenir un pic de réponse impulsionnelle en début de fenêtre d'analyse.

Toutefois, le retard entre le signal de haut-parleur shp, signal de référence, et le signal de microphone smic, évolue à partir de l'initialisation de l'ensemble, ainsi que mentionné précédemment, en fonction des gestions de tâches effectuées par le système d'exploitation OS. Ainsi, cette évolution justifie la mise en oeuvre de l'étape Cb afin d'effectuer de nouvelles mesures de retard successives pendant toute la communication et donc pendant toute la mise en oeuvre du procédé objet de la présente invention.

Pour la mise en oeuvre de la sous-étape Cb, on utilise de préférence une méthode de mesure non-intrusive.

A titre d'exemple non limitatif, une méthode non-intrusive peut consister en un calcul de corrélation d'enveloppe d'énergies du signal de référence, le signal de haut-parleur, et de l'autre signal, le signal de microphone, méthode telle que décrite dans la demande de brevet français 2 733 867.

En référence à la méthode de calcul de corrélation d'enveloppe d'énergies des deux signaux précités, on indique que lorsque la présence d'un signal haut-parleur HP a été détectée par un dispositif de détection d'activité vocale par exemple, les énergies à moyen terme du signal envoyé à la carte son et du signal reçu par le micro sont calculées. De ces deux signaux, on déduit alors une suite de coefficients de corrélation entre les deux enveloppes glissantes. Le pic de la courbe de corrélation indique le retard existant entre les deux signaux.

Une description plus détaillée de la sous-étape de validation de la mesure de retard existant pour l'obtention d'une valeur de retard courant, sous-étape mise en oeuvre à l'étape D décrite en liaison avec la figure 2a, sera maintenant donnée en liaison avec les figures 4a et 4b.

Sur la figure 4a, on a désigné par $re_j$ la mesure de retard existant et $rc_n$ les valeurs de retard courant.

Ainsi, $re_j$ et $re_{j+1}$ désignent deux retards existants successifs de rang j et j+1 suivant un retard courant précédent, désigné par $rc_n$, le retard courant issu de la validation des retards existants successifs $re_j$ et $re_{j+1}$ étant lui-même désigné par $rc_{n+1}$.

En référence à la figure 4a, on indique que l'étape consistant à valider la mesure du retard existant $re_j$ pour obtenir une valeur de retard courant $rc_{n+1}$ consiste au moins à détecter l'écart de retard entre au moins l'un des retards existants successifs précités $re_j$ et $re_{j+1}$ suivant le retard courant précédent $rc_n$ et la valeur de ce retard courant précédent $rc_n$. Cet écart de retard est noté :

$$\delta re_{j,c_n} = re_j - rc_n$$

$$\delta re_{j+1}, c_n = re_{j+1} - rc_n$$

La valeur de cet écart ou de ces écarts est comparée à une valeur de durée déterminée, notée $\tau$. Cette valeur de durée déterminée peut par exemple être prise égale à 15 ms en fonction des caractéristiques du terminal informatique considéré, ainsi qu'il sera décrit ultérieurement dans la description.

Suite à l'étape de comparaison précitée, la sous-étape consiste alors à valider comme valeur de retard courant $rc_{n+1}$ au moins l'un des retards existants successifs ou une combinaison linéaire de ces derniers si cet écart de retard est supérieur à cette durée déterminée $\tau$.

La valeur de retard courant précédente $rc_n$ est validée comme valeur de retard courant suivante $rc_{n+1}$ sinon.

Selon un aspect particulièrement avantageux du procédé objet de la présente invention, on indique que la valeur de la durée déterminée $\tau$ est ajustée en fonction de la valeur du retard courant. Ceci permet d'introduire une caractéristique de flexibilité et d'adaptabilité du procédé objet de la présente invention à des terminaux informatiques de tout type et équipés des systèmes d'exploitation les plus divers. Typiquement, la durée déterminée $\tau$ peut être ajustée entre une valeur maximale sensiblement égale à 30 ms et une valeur minimale sensiblement égale à 10 ms. La loi d'adaptation de la valeur $\tau$ entre valeurs maximale et minimale précitées peut être établie expérimentalement.

La gestion des valeurs de retard courant précédemment citée peut alors être réalisée de manière séquentielle, ainsi que représenté en figure 4b, pour assurer une optimisation du filtrage et de l'annulation d'écho. Cette optimisation correspond, outre la prise en compte de deux valeurs de retard existant successives $re_j$, $re_{j+1}$, de la valeur de retard existant suivante $re_{j+2}$. Sur la figure 4b, on a représenté le retard courant pris égal à une valeur désignée par MOY comme correspondant à un état stable à l'étape 1000, cette valeur moyenne vérifiant la relation :

$$MOY = rc_n.$$

La valeur MOY peut correspondre à une valeur moyenne ainsi qu'il sera décrit ci-après dans la description.

Dès l'apparition d'une première mesure différente, dite incohérente, telle que $re_j \neq MOY$, l'occurrence d'une telle situation amène à une situation 1001 qui est un état d'attente 1 suite à la détection du changement précité.

Sur occurrence d'une deuxième valeur de retard existant, deuxième mesure $re_{j+1}$, différente de la valeur de retard existant précédente $re_j$ et de la valeur moyenne MOY précédente, la valeur de retard existant précédente $re_j$ est remplacée par la valeur de retard existant $re_{j+1}$. Ce remplacement est représenté sur la figure 4b par la boucle fermée au niveau de l'état d'attente 1001.

Au contraire, sur occurrence d'une deuxième mesure de valeur de retard existant $re_{j+1}$ identique à la valeur de retard existant précédente $re_j$, l'état d'attente 1 de l'étape 1001 est suivi d'un état d'attente 2 de l'étape 1002 correspondant à l'égalité des valeurs de retards existants $re_j$ et $re_{j+1}$, cet état d'attente 1002 correspondant à une attente de confirmation.

Sur occurrence d'une troisième mesure de valeur de retard existant $re_{j+2}$ égale aux valeurs de retard existant précédentes $re_{j+1}$ et $re_j$, l'état d'attente 1002 précité est suivi d'un nouvel état stable 1003 au cours duquel une nouvelle moyenne NMOY est calculée correspondant à la moyenne des trois valeurs de retards existants successifs $re_j$, $re_{j+1}$ et $re_{j+2}$.

Au contraire, sur occurrence d'une troisième valeur de retard existant $re_{j+2}$ différente de la valeur de la première valeur de retard existant $re_j$ et de la valeur moyenne de l'état stable courant, en l'occurrence la valeur moyenne MOY de l'étape 1000 précédemment citée, la valeur de la troisième mesure de retard existant $re_{j+2}$ est alors utilisée pour remplacer la valeur de la première mesure de retard existant $re_j$, l'état d'attente 1002 étant ramené à l'état d'attente 1001 de détection d'un changement.

Toute mesure dite cohérente de la valeur de retard existante de rang ultérieur à partir des états d'attente 1001 et 1002, mesure ultérieure notée $re_x$ dont la valeur correspond à la valeur moyenne actuelle, ramène le processus à l'état stable 1000 précédemment mentionné.

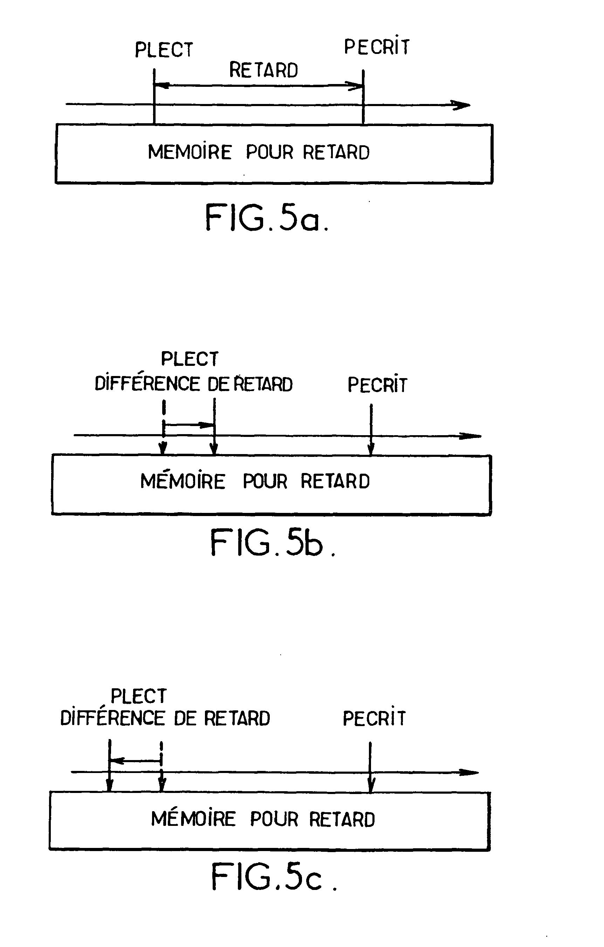

Une description plus détaillée du processus de commande du retard du signal de référence, à partir de la valeur de retard courant $rc_n$, établie ainsi que décrit précédemment, sera maintenant donnée en liaison avec les figures 5a, 5b et 5c.

De manière plus spécifique, on indique que le processus précité peut être mis en oeuvre grâce à une mémoire du terminal informatique et de deux pointeurs $P_{écrit}$ et $P_{lect}$ adressant cette mémoire, le pointeur $P_{écrit}$ étant dédié à l'écriture des échantillons du signal de référence et le pointeur $P_{lect}$ à la lecture des échantillons retardés de ce même signal.

En référence à la figure 5a, on indique que la valeur du retard, égale à la valeur de retard courant, est donnée par la relation ci-après :

$$P_{\text{écrit}} - P_{\text{lect}} = \text{retard x durée de période d'échantillonnage,}$$

la valeur retard étant exprimée en nombre d'échantillons.

La gestion des deux pointeurs précités est telle que $P_{\text{écrit}}$, $P_{\text{lect}}$ est incrémentée d'une unité à chaque opération d'écriture ou de lecture respectivement.

Lors d'une modification de la valeur de retard, il convient de modifier le pointeur $P_{\text{lect}}$ comme suite, en référence aux figures 5b et 5c :

■ si, ainsi que représenté en figure 5b, le retard diminue, le pointeur de lecture $P_{\text{lect}}$ est incrémenté, rapproché, du pointeur d'écriture $P_{\text{écrit}}$ d'une quantité égale à la diminution du retard. Cette quantité ne peut pas dépasser la valeur du retard courant ;

■ si au contraire, ainsi que représenté en figure 5c, le retard augmente, le pointeur de lecture est décrémenté, éloigné, d'une quantité égale à l'augmentation du retard.

Il convient toutefois, dans tous les cas, d'éviter tout problème de débordement mémoire. Ainsi, à partir d'un positionnement initial adapté de la fenêtre d'analyse du filtre adaptatif AEC, il est possible d'obtenir une annulation ou une réduction optimale du signal d'écho.

On a ainsi décrit un procédé temps réel de traitement et de gestion pour l'annulation d'écho entre un haut-parleur et un microphone d'un terminal informatique particulièrement performant dans la mesure où, de conception logicielle, ce procédé peut être implanté sur toute station de travail, tout ordinateur personnel, quel que soit le système d'exploitation utilisé par ces derniers.

En particulier, la mise en oeuvre précitée permet une généralisation de ce type d'outils de communication pour lesquels toutes les fonctions audio font appel à la carte son du terminal informatique considéré et en particulier des applications API lorsque le système d'exploitation est constitué par exemple par un système d'exploitation de la famille *WINDOWS®*. Le procédé ainsi mis en oeuvre permet de s'affranchir de toutes cartes spécifiques et en particulier de cartes d'adjonction, le procédé objet de la présente invention étant alors mis en oeuvre par un moyen purement logiciel dans la machine hôte. La fonction d'annulation d'écho est ainsi instituée en une tâche à part entière au même titre que les tâches habituellement gérées par des systèmes d'exploitation précités.

## Revendications

**1.** Procédé temps réel de traitement et de gestion pour l'annulation d'écho entre un haut-parleur (HP) et un microphone (M) d'un terminal informatique géré par un système d'exploitation multitâche assurant l'acquisition et la restitution audio, l'écho étant engendré par un couplage physique parasite entre le haut-parleur délivrant un signal de haut-parleur (shp) et le microphone (M) recevant un signal de microphone (smic) et corrigé par soustraction au signal de microphone d'un signal de correction (sc) formé par une fraction du signal de haut-parleur retardé et filtré, **caractérisé en ce qu'**il consiste :

- à établir (A) l'un des signaux de haut-parleur (shp) respectivement de microphone (smic) comme signal de référence et à synchroniser l'autre signal de microphone (smic) respectivement de haut-parleur (shp) par rapport à ce signal de référence ;
- à synchroniser (B) les tâches d'acquisition et de restitution audio ;
- à mesurer (C) périodiquement le retard existant entre l'autre signal et le signal de référence, pour obtenir une valeur de retard existant mesurée ($re_j$) ;
- à valider (D) la mesure de retard existant ($re_j$) pour obtenir une valeur de retard courant ($re_n$) et à commander le retard appliqué audit signal de référence à partir de ce retard courant ($rc_n$), ce qui permet d'annuler par soustraction ledit signal d'écho.

**2.** Procédé selon la revendication 1, **caractérisé en ce que** l'étape (A) consistant à établir l'un des signaux de haut-parleur (shp) respectivement de microphone (smic) comme signal de référence et à synchroniser l'autre signal de microphone (smic) respectivement de haut-parleur (shp), comprend une sous-étape auxiliaire consistant à recevoir, respectivement émettre, les échantillons du signal microphone (smic), respectivement les échantillons du signal haut-parleur (shp) à la fréquence maximale d'échantillonnage du système informatique puis de ramener, par décimation, cette fréquence d'échantillonnage à sa valeur nominale, ce qui permet de supprimer la dérive susceptible d'exister entre le signal de haut-parleur et le signal de microphone, pour un fonctionnement à la fréquence d'échantillonnage nominale.

**3.** Procédé selon la revendication 1 ou 2, **caractérisé en ce que** l'étape consistant à synchroniser les tâches d'acquisition (W) et de restitution (R) sonore consiste à synchroniser deux tâches à partir d'une référence temporelle de synchronisation de tâche.

**4.** Procédé selon la revendication 1 ou 2, **caractérisé en ce que** l'étape consistant à synchroniser les tâches d'acquisition (W) et de restitution (R) sonore consiste à engendrer, à partir du système d'exploitation, une tâche commune d'acquisition, restitution sonore ($B_{or}$, $B_{ow}$).

**5.** Procédé selon l'une des revendications 1 à 4, **caractérisé en ce que** l'étape consistant à mesurer le retard existant entre l'autre signal et le signal de référence consiste :

- à mesurer ($C_a$) le retard existant à l'initialisation, pour définir un retard initial calibré et positionner la fenêtre d'analyse de l'annulation d'écho ;
- à mesurer ($C_b$) ce retard existant successivement compte tenu des opérations déclenchées par le système d'exploitation dudit terminal informatique.

**6.** Procédé selon la revendication 5, **caractérisé en ce que** l'étape ($C_b$) consistant à mesurer ce retard existant successivement est réalisée à partir d'une processus de mesure non intrusif.

**7.** Procédé selon la revendication 6, **caractérisé en ce que** l'étape consistant à valider la mesure du retard existant ($re_j$) pour obtenir une valeur de retard courant ($rc_{n+1}$) consiste au moins :

- à détecter l'écart de retard entre au moins l'un des retards existants successifs ($re_j$) ($re_{j+1}$), suivant le retard courant précédent ($rc_n$), et ce retard courant précédent ($rc_n$) ;
- à comparer cet écart de retard à une durée déterminée, et
- à valider comme valeur de retard courant ($rc_{n+1}$) au moins l'un des retards existants successifs si cet écart de retard est supérieur à cette durée déterminée, et
- à valider comme valeur de retard courant ($rc_{n+1}$) la valeur de retard courant précédente ($rc_n$) sinon.

**8.** Procédé selon la revendication 7, **caractérisé en ce que** la durée déterminée est ajustée entre une valeur maximale et une valeur minimale, en fonction du retard courant.

**Claims**

**1.** Real time processing and management method for echo cancellation between a loudspeaker (HP) and a microphone (M) of a computer terminal managed by a multitask operating system catering for audio acquisition and playback, the echo being caused by parasitic physical coupling between the loudspeaker delivering a loudspeaker signal (shp) and the microphone (M) receiving a microphone signal (smic) and corrected by subtracting from the microphone signal a correction signal (sc) formed by a fraction of the loudspeaker signal delayed and filtered, **characterized in that** it consists:

- in establishing (A) one of the loudspeaker (shp), respectively microphone (smic), signals as reference signal and in synchronizing the other signal, microphone (smic) respectively, loudspeaker (shp), with respect to this reference signal;
- in synchronizing (B) the audio acquisition and playback tasks;
- in periodically measuring (C) the existing delay between the other signal and the reference signal, so as to obtain a measured value of existing delay ($re_j$);
- in validating (D) the measurement of existing delay ($re_j$) so as to obtain a value of current delay ($re_n$) and in controlling the delay applied to said reference signal on the basis of this current delay ($rc_n$), thereby making it possible to cancel by substraction said echo signal.

**2.** Method according to Claim 1, **characterized in that** the step (A) consisting in establishing one of the loudspeaker (shp), respectively microphone (smic), signals as reference signal and in synchronizing the other microphone (smic), respectively loudspeaker (shp), signal comprises an auxiliary substep consisting in receiving, respectively transmitting, the samples of' the microphone signal (smic), respectively the samples of the loudspeaker signal (shp) at the maximum frequency of sampling of the computer system then in restoring, by decimation, this sampling frequency to its nominal value, thereby making it possible to eliminate the drift which may exist between the loudspeaker signal and the microphone signal, for operation at the nominal sampling frequency.

3. Method according to Claim 1 or 2, **characterized in that** the step consisting in synchronizing the sound acquisition (W) and playback (R) tasks consists in synchronizing two tasks on the basis of a task synchronization time reference.

4. Method according to Claim 1 or 2, **characterized in that** the step consisting in synchronizing the sound acquisition (W) and playback (R) tasks consists in generating, on the basis of the operating system, a common sound acquisition, playback task ($B_{or}$, $B_{ow}$).

5. Method according to one of Claims 1 to 4, **characterized in that** the step consisting in measuring the existing delay between the other signal and the reference signal consists:

- in measuring ($C_a$) the delay existing on initialization, so as to define a calibrated initial delay and in positioning the analysis window for the echo cancellation;
- in measuring ($C_b$) this existing delay successively taking into account the operations triggered by the operating system of said computer terminal.

6. Method according to Claim 5, **characterized in that** the step ($C_b$) consisting in successively measuring this existing delay is carried out on the basis of a nonintrusive measurement process.

7. Method according to Claim 6, **characterized in that** the step consisting in validating the measurement of the existing delay ($re_j$) so as to obtain a value of current delay ($rc_{n+1}$) consists at least:

- in detecting the discrepancy in delay between at least one of the successive existing delays ($re_j$) ($re_{j+1}$), following the previous current delay ($rc_n$), and this previous current delay ($rc_n$)
- in comparing this discrepancy delay with a specified duration, and
- in validating as value of current delay ($rc_{n+1}$) at least one of the successive existing delays if this discrepancy in delay is greater than this specified duration, and
- in validating as value of current delay ($rc_{n+1}$) the previous value of current delay ($rc_n$) otherwise.

8. Method according to Claim 7, **characterized in that** the specified duration is adjusted between a maximum value and a minimum value, as a function of the current delay.

**Patentansprüche**

1. Echtzeit-Verarbeitungs- und Verwaltungsverfahren zur Echounterdrückung zwischen einem Lautsprecher (HP) und einem Mikrofon (M) eines, Computer-Endgeräts, das von einem Multitask-Betriebssystem verwaltet wird, das die Erfassung und die Audiowiedergabe gewährleistet, wobei das Echo von einer physikalischen Störkopplung zwischen dem ein Lautsprechersignal (shp) liefernden Lautsprecher und dem ein Mikrofonsignal (smic) empfangenden Mikrofon (M) erzeugt und durch Subtraktion eines von einem Bruchteil des verzögerten und gefilterten Lautsprechersignals geformten Korrektursignals (sc) vom Mikrofonsignal korrigiert wird, **dadurch gekennzeichnet, dass** es darin besteht:

- entweder das Lautsprechersignal (shp) oder das Mikrofonsignal (smic) als Bezugssignal festzulegen (A) und das andere Signal, d.h. das Mikrofonsignal (smic) oder das Lautsprechersignal (shp), bezüglich dieses Bezugssignals zu synchronisieren;
- die Tasks der Erfassung und der Audiowiedergabe zu synchronisieren (B);
- periodisch die Verzögerung zu messen (C), die zwischen dem anderen Signal und dem Bezugssignal besteht, um einen gemessenen existierenden Verzögerungswert ($re_j$) zu erhalten;
- die Messung der existierenden Verzögerung ($re_j$) zu validieren (D), um einen laufenden Verzögerungswert ($rc_n$) zu erhalten und die Verzögerung des Bezugssignals ausgehend von dieser laufenden Verzögerung ($rc_n$) zu steuern, was es ermöglicht, durch Subtraktion das Echosignal zu unterdrücken.

2. Verfahren nach Anspruch 1, **dadurch gekennzeichnet, dass** der Schritt (A), der darin besteht, eines der Signale, das Lautsprechersignal (shp) oder das Mikrofonsignal (smic), als Bezugssignal festzulegen und das andere, also das Mikrofonsignal (smic) oder das Lautsprechersignal (shp), zu synchronisieren, einen Hilfs-Unterschritt aufweist, der darin besteht, die Tastproben des Mikrofonsignals (smic) bzw. die Tastproben des Lautsprechersignals (shp) mit der maximalen Tastfrequenz des informationsverarbeitenden Systems zu empfangen bzw. zu senden, und dann durch Dezimierung diese Tastfrequenz auf ihren Nennwert zurückzuführen, was es ermöglicht, die Abweichung, die möglicherweise zwischen dem Lautsprechersignal und dem Mikrofonsignal existiert, für einen Betrieb auf der Nenntastfrequenz zu beseitigen.

3. Verfahren nach Anspruch 1 oder 2, **dadurch gekennzeichnet, dass** der Schritt, der darin besteht, die Tasks der Erfassung (W) und der Audiowiedergabe (R) zu synchronisieren, darin besteht, zwei Tasks ausgehend von einem zeitlichen Tasksynchronisationsbezug zu synchronisieren.

4. Verfahren nach Anspruch 1 oder 2, **dadurch gekennzeichnet, dass** der Schritt, der darin besteht, die Tasks der Erfassung (W) und der Audiowiedergabe (R) au synchronisieren, darin besteht, ausgehend vom Betriebssystem eine gemeinsame Erfassungs- und Audiowiedergabetask ($B_{or}$, $B_{ow}$) zu erzeugen.

5. Verfahren nach einem der Ansprüche 1 bis 4, **dadurch gekennzeichnet, dass** der Schritt, der darin besteht, die zwischen dem anderen Signal und dem Bezugssignal existierende Verzögerung zu messen, darin besteht:

- die bei der Initialisierung existierende Verzögerung zu messen ($C_a$), um eine kalibrierte Initialverzögerung zu definieren und das Analysefenster der Echounterdrückung zu positionieren;
- diese existierende Verzögerung nacheinander unter Berücksichtigung der Operationen zu messen ($C_b$), die vom Betriebssystem des Computer-Endgeräts ausgelöst werden.

6. Verfahren nach Anspruch 5, **dadurch gekennzeichnet, dass** der Schritt ($C_b$), der darin besteht, diese existierende Verzögerung nacheinander zu messen, ausgehend von einem nicht-unterbrechenden Messprozess ausgeführt wird.

7. Verfahren nach Anspruch 6, **dadurch gekennzeichnet, dass** der Schritt, die Messung der existierenden Verzögerung ($re_j$) zu validieren, um einen laufenden Verzögerungswert ($rc_{n+1}$) zu erhalten, mindestens darin besteht:

- die Verzögerungsabweichung zwischen mindestens einer der aufeinander folgenden existierenden Verzögerungen ($re_j$) ($re_{j+1}$), die auf die vorhergehende laufende Verzögerung ($rc_n$) folgen, und dieser vorhergehenden laufenden Verzögerung ($rc_n$) zu erfassen;
- diese Verzögerungsabweichung mit einer bestimmten Dauer zu vergleichen; und
- als laufenden Verzögerungswert ($rc_{n+1}$) mindestens eine der aufeinander folgenden existierenden Verzögerungen zu validieren, wenn diese Verzögerungsabweichung größer ist als diese bestimmte Dauer; und
- ansonsten als laufenden Verzögerungswert ($rc_{n+1}$) den vorhergehenden laufenden Verzögerungswert ($rc_n$) zu validieren.

8. Verfahren nach Anspruch 7, **dadurch gekennzeichnet, dass** die bestimmte Dauer in Abhängigkeit von der laufenden Verzögerung zwischen einem maximalen Wert und einem minimalen Wert eingestellt wird.

FIG.1.
(ART ANTÉRIEUR)

OS MULTITÂCHE
(ACQUISITION/RESTITUTION
AUDIO.)

CHOIX DU SIGNAL DE
RÉFÉRENCE/AUTRE SIGNAL
= SIGNAL MICRO X SIGNAL
HAUT-PARLEUR                          A

SYNCHRONISATION DES TÂCHES
D'ACQUISITION ET DE
RESTITUTION AUDIO.                    B

FIG.2a.

MESURE PÉRIODIQUE DU
RETARD EXISTANT ENTRE
AUTRE SIGNAL ET SIGNAL
DE RÉFÉRENCE.                         C

rej

. VALIDATION DE LA MESURE
   DE rej POUR OBTENTION
   D'UNE VALEUR DE
   RETARD COURANT rcn              D
. COMMANDE APPLIQUÉE AU
   SIGNAL DE RÉFÉRENCE À
   PARTIR DE rcn

ANNULATION DU
SIGNAL D'ÉCHO

13

# FIG.2b.

TÂCHE DE LECTURE

BOr    B1r    t

TÂCHE D'ÉCRITURE

BOw    B1w    t

| BOr + BOw | B1r + B1w | t |

## FIG.2c.

HP

TÂCHE RESTITUTION

API SYSTÈME

SYNCHRO-NISATION

TÂCHE ACQUISITION

M

smic

MESURE RETARD    VALIDATION DU RÉSULTAT    shp    RETARD VARIABLE    AEC

B    C    D

## FIG.2d.

FIG.3.

| - MESURE RETARD EXISTANT À INITIALISATION ric<br>- POSITION DE LA FENÊTRE D'ANALYSE AEC. | Ca |

| MESURE SUCCESSIVE DU RETARD EXISTANT rej | Cb |

```
        ┌─────────────────────────┐
        │    OS.MULTITÂCHE         │
        │ ( ACQUISITION/RESTITUTION│
        │       AUDIO )            │
        └─────────────────────────┘
                    │
                    ▼
   ┌───────────────────────────────┐
   │  SUR_ÉCHANTILLONNAGE /         │
   │  SOUS_ÉCHANTILLONNAGE.         │
   │  CHOIX DU SIGNAL DE            │
   │  RÉFÉRENCE / AUTRE          ─A │
   │  SIGNAL = SIGNAL MICRO X       │
   │  SIGNAL HAUT-PARLEUR           │
   └───────────────────────────────┘
                    │
                    ▼
   ┌───────────────────────────────┐
   │ SYNCHRONISATION DES TÂCHES  ─B │
   │ D'ACQUISITION ET DE            │
   │ RESTITUTION AUDIO.             │
   └───────────────────────────────┘
                    │
                    ▼
   ┌───────────────────────────────┐
   │ MESURE PÉRIODIQUE DU           │
   │ RETARD EXISTANT ENTRE       ─C │
   │ AUTRE SIGNAL ET SIGNAL         │
   │ DE RÉFÉRENCE.                  │
   └───────────────────────────────┘
              rej │
                  ▼
   ┌───────────────────────────────┐
   │ .VALIDATION DE LA MESURE       │
   │   DE rej POUR OBTENTION        │
   │   D'UNE VALEUR DE              │
   │   RETARD COURANT rcn        ─D │
   │ •COMMANDE APPLIQUÉE AU         │
   │   SIGNAL DE RÉFÉRENCE À        │
   │   PARTIR DE rcn                │
   └───────────────────────────────┘
                    │
                    ▼
        ┌─────────────────────────┐
        │    ANNULATION DU         │
        │    SIGNAL D'ÉCHO         │
        └─────────────────────────┘
```

FIG.2e.

$r c_n$

$r c_{n+1}$

$r e_j$

$r e_{j+1}$

$r e_{j+2}$

t

$$\begin{cases} \delta\, re_j\,/\,c_n = re_j - rc_n \\ \delta\, re_{j+1}\,/\,c_n = re_{j+1} - rc_n \end{cases}$$

$$\begin{cases} rc_{n+1} = re_j\,/\,re_{j+1} \\ \text{si } \delta\, re_j\,/\,c_n > \tau \text{ ET/OU } \delta\, re_{j+1}\,/\,cn > \tau \\ rc_{n+1} = rc_n \quad \text{SINON.} \end{cases}$$

# FIG.4a.

ÉTAT STABLE:
MOY =
RETARD COURANT — 1000

PREMIÈRE MESURE
«INCOHÉRENTE»
$re_j \neq$ MOY

MESURE «COHÉRENTE»
$re_x =$ MOY
RETOUR ÉTAT STABLE

ÉTAT ATTENTE_1
$re_j \neq$ MOY
DÉTECTION
CHANGEMENT — 1001

DEUXIÈME MESURE
$re_{j+1} \neq re_j$
$re_{j+1} \neq$ MOY
$re_j$ REMPLACÉ PAR $re_{j+1}$

TROISIÈME MESURE
$re_{j+2} \neq re_j$
ET $re_{j+2} \neq$ MOY
$re_j$ REMPLACÉ PAR $re_{j+2}$

DEUXIÈME MESURE
$re_{j+1} = re_j$

ÉTAT ATTENTE_2
$re_{j+1} = re_j$
ATTENTE
CONFIRMATION — 1002

TROISIÈME MESURE
$re_{j+2} = re_j$
$re_{j+2} = re_{j+1}$

NOUVEL ÉTAT STABLE
$re_{j+2} = re_{j+1} = re_j$
NOUVELLE MOYENNE
N MOY — 1003

# FIG.4b.

PLECT                    PECRIT

RETARD

MEMOIRE POUR RETARD

## FIG.5a.

PLECT
DIFFÉRENCE DE RETARD          PECRIT

MÉMOIRE POUR RETARD

## FIG.5b.

PLECT
DIFFÉRENCE DE RETARD          PECRIT

MÉMOIRE POUR RETARD

## FIG.5c.